# EUROPEAN PATENT SPECIFICATION

(11) **EP 3 955 751 B1**
(45) Date of publication and mention of the grant of the patent: **08.01.2025**
(21) Application number: 20727715.3
(22) Date of filing: 05.05.2020
(51) Int. Cl.: A23L 25/00, A23B 7/005, A23B 7/148, A23L 3/005, A23L 3/015

(54) **METHOD FOR PRODUCING PACKAGED ROAST CHESTNUTS**
VERFAHREN ZUR HERSTELLUNG VERPACKTER GERÖSTETER KASTANIEN
PROCÉDÉ DE PRODUCTION DE MARRONS GRILLÉS CONDITIONNÉS

(30) Priority: 20.05.2019 IT 201900007019
(43) Date of publication of application: 23.02.2022
(73) Proprietor: Italcastagne S.r.l., 83100 Avellino (AV) (IT)
(72) Inventor: INGINO, Elio Giuseppe, 83100 Avellino (AV) (IT)
(74) Representative: Fiammenghi, Eva
(86) International application number: PCT/IB2020/054248
(87) International publication number: WO 2020/234677

(56) References cited:
- CN-A- 1 423 951
- CN-A- 108 464 475
- FR-A1- 2 401 066
- JP-A- 2008 073 022
- JP-A- 2015 000 053
- JP-A- H06 209 702
- JP-A- S59 140 829
- KR-A- 20130 036 797
- US-A1- 2008 138 476

## Description

### Field of the invention

The present industrial invention patent application generally regards the food industry and in particular that of the agri-food industry meant for the transformation of chestnuts and brown chestnuts.

### State of the art

As known, chestnuts and which also include all the varieties, among which the brown chestnuts, can be preferably consumed following any transformation into edible form. Roast chestnuts represent a preferred edible form of these fruits, since the roasting confers them a typically sweet taste, transforming part of the starch contained therein into simple sugars and altering part of the carbohydrates and proteins.

Currently, according to the prior art, the method for producing roast chestnuts is entirely entrusted onto the individual skills of the person who cooks them, since such transformation is mainly carried out in domestic environment. This type of traditional cooking consists in making a small longitudinal cut on the convex side of each chestnut, so as to prevent the latter from exploding once subjected to heat, then in cooking them in an open fire, in an oven or more conventionally in laying them on a suitable pan, which is held over the fire and in turning them regularly to prevent them from burning and until the skin opens slightly. Appliances, suitable for domestic use equipped with a rotating basket, driven by an electric motor, which guarantee a better cooking of chestnuts, without excessive burns are also available on the market.

Actually, such method entails high costs and very low yields in terms of the final product ready for consumption due to the impossibility of a uniform and standard cooking for each single chestnut and for the classical defects of chestnuts, which are not visible and only manifest themselves when the product is completely peeled. Actually, in chestnuts the episperm residues, stains, invisible rotten portions and burns confer a high percentage of waste on the finished product.

It should be observed that the best production of the roast chestnuts occurs in the street by the classic chestnut roasters, which, thanks to their vast experience, are capable of obtaining a perfectly cooked finished product, but with the great disadvantage of the high cost, both for the slow and traditional cooking method and due to the possibility/risk that some batches of the product may have invisible defects under the skin which increase the already considerable cost by a great deal. JP 2008 073022 A discloses a method for producing packaged roasted chestnuts characterised in that it consists of the following processes: a. process for preparing and peeling the chestnuts; b. roasting process, in which the by now peeled product is subjected to a roasting step in a conventional oven at 170-230°C for 10-30 minutes; c. packaging process in a container with oxygen barrier layer and oxygen absorption layer. In addition, it is suitable to seal suitably, after carrying out oxygen substitution by an inert gas at the point of discolouration prevention. Nitrogen, argon, etc. are mentioned as an inert gas; and d. stabilisation process consisting of a sterilisation step in a hot-water retort for 30 minutes at 121°C.

Nowadays the only roast chestnut produced with an industrial method is the frozen roast chestnut with the skin. As a matter of fact, once thawed, it represents a product ready to be consumed, but having all those defects not directly visible and mentioned previously, that is to say that they manifest themselves only when the product is completely peeled. A further disadvantage of the frozen roast chestnut lies in the fact that one is compelled to follow the cold chain, with all the contingent problems in terms of preservation and transportation which have an inevitably negative impact on the already high selling price.

Therefore, an object of the present production method subject of the invention generally consists in providing a method capable of providing a finished product, which is easy to preserve, transport and which, in some cases, maintains the organoleptic properties of the just roasted product. A more particular object is to provide a finished product which can be easily heated in a microwave, so as to fully simulate the similar product just roasted. Other advantages of the invention will be apparent from the detailed description of an embodiment thereof, provided by way of non-limiting example, illustrated below.

### Description of the invention

The present industrial invention patent application is intended to describe and claim an innovative method according to the claims for producing roast chestnuts. In particular, what is intended to be protected is a new method or process including the step of selecting, screening and roasting chestnuts as well as the step of packaging roast chestnuts.

More specifically, the present industrial invention patent application achieves its main objects, consisting of an innovative production method capable of producing roast chestnuts, which, by virtue of the particular packaging process, can be easily stored for long periods of time and which do not require special storage conditions. Another fundamental characteristic according to the present invention lies in the fact that the production process allows these roast chestnuts to be produced at the origin in association with excipients capable of conferring particular flavouring to the latter.

Another characteristic lies in the fact that, once deprived of their packaging and consumed, the roast chestnuts will show the quality, organoleptic and structural properties specific to roast chestnuts just roasted.

A further not less fundamental characteristic relates to the fact that the aforementioned roast chestnuts still packaged can easily be subjected to a fast and simple microwave heating cycle in a conventional domestic microwave.

A further object is to provide a process subject of the invention which can be made on an industrial scale, whose components are of the standard type and are perfectly available on the market and whose production is fully sustainable from an economic and environmental point of view.

Further characteristics of the present invention are described in the following detailed description of one or more specific embodiments, protected by the related dependant claims.

### Brief description of the drawings

The characteristics just described will become more apparent from the following description of the process illustrated, purely by way of non-limiting example, in the attached drawings, wherein:
- FIGURE 1 shows the exemplifying flow chart of production of the entire production process according to the present invention;
- FIGURE 2 shows the flow chart of the process for preparing and peeling chestnuts 100;
- FIGURE 3 shows the flow chart of the roasting process 200;
- FIGURE 4 shows the flow chart of the flavouring process 300;
- FIGURE 5 shows the flow chart of the packaging process 400;
- FIGURE 6 shows the flow chart of the stabilisation process 500.

### Preferred embodiments of the invention

The present process subject of the invention will now be described in detail purely by way of example, with reference to the figures and to a preferred embodiment thereof shown herein, in which identical reference numbers were used for the identical components and/or production steps.

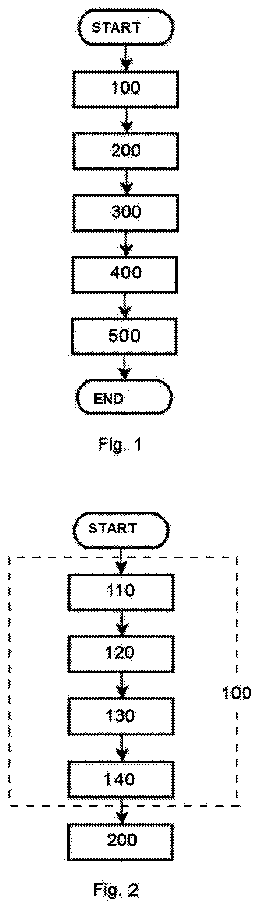

As shown in the attached Figure 1, the present invention mainly consists of five production processes comprising the process of preparing and peeling chestnuts 100, the roasting process 200, the flavouring process 300, the packaging process 400 and lastly the stabilisation process 500.

With reference to Figure 2, it is observable that the first step of the process provides for the process of preparing and peeling chestnuts 100 in turn consisting of the step of introducing and preparing chestnuts 110, in which the latter are placed in a fresh state or in any case in a state suitable for roasting, but in any case with a moisture content comprised between 10% and 80%, on suitable roller benches in the processing line, thanks to which the personnel has a perfect and full vision of the product to be discarded. Then the chestnuts are sent to the washing step 120 by immersion in suitable vats. They are then subjected to the fundamental peeling step 130 carried out by conventional automated machines capable of eliminating the pericarp and episperm, by administering steam or using the "brulage" method in open fire. Once the chestnuts have been peeled, in order to prevent the biological degradation and therefore for the purposes of obtaining the excellent organoleptic properties according to the present invention, they are subjected to the chilling step 140 by sending them to the deep-freezing tunnels at a temperature of at least -18°C for a period comprised between 4 hours and 24 hours.

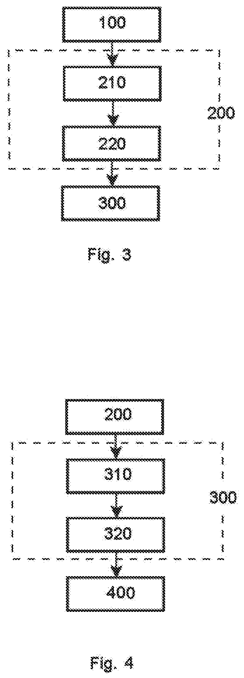

At this point, as shown in Figure 3, there follows the roasting process 200, in which the product frozen and peeled by now is subjected to the screening step 210 carried out by the designated personnel, capable of eliminating the chestnuts with any even minimum quality defect. There follows the basic roasting step 220 follows, in which the chestnuts are laid manually on a conveyor belt or on dripping pans and arranged in a conventional static or ventilated oven suitable for the purpose, for a period of time comprised between 1 min and 90 min and with a temperature range comprised between 600°C and 150°C.

The chestnuts roasted by now are sent to the flavouring process 300 shown in Figure 4. Such flavouring process 300 could be favourably implemented even before the roasting process 200. Said flavouring process 300 comprises the step of selecting and preparing the flavouring 310, which consists of selecting at least one substance including fresh or dry laurel, ginger, lemon, orange peel, wine, various liquors, cinnamon, vanilla, refined sugar, cane sugar and other types of unrefined sugar, millefiori honey, acacia honey, chestnut honey, salt, pepper, turmeric, sweet paprika, spicy paprika, onion, shallot, garlic, Brussels sprouts, thyme, parsley, cocoa and various spices. Next is the mixing step 320, in which the chestnuts are placed at contact with at least one of the aforementioned flavour enhancement agents and left in this condition until the package is opened and then forwarded to consumers for consumption.

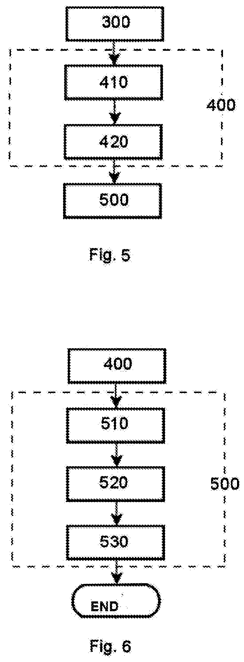

As shown in Figure 5, next is the packaging process 400, which consists in the step of packaging the roast chestnuts coming from the previous processes in microwavable containers such as bags, jars or trays suitable to be subjected to treatment in microwaves using a conventional domestic microwaves. Such characteristic is in fact fundamental, given that the roast chestnuts coming from the method subject of the invention and consumed immediately after being heated by means of a microwave oven will acquire all the organoleptic and structural characteristics specific to the roast chestnuts roasted on the spot. A further step is that of packaging in a protective atmosphere 420 in order to safeguard the appearance and the organoleptic and microbiological characteristics of the roast chestnuts. A further and final result is the stabilisation process 500 of the roast chestnuts shown in Figure 6, which consists in subjecting them to the step 510 of stabilising/sterilising in a conventional autoclave same case applying to a steam and ventilated steam autoclave or water and steam shower autoclave, for a period comprised between 3 min and 3 hours and with a temperature range comprised between 75°C and 135°C.

In order to neutralise the effects related to overpressure that inevitably occur in the containers, tending to cause them to burst or deform irremediably, during said stabilisation/sterilisation step 510 the counter-pressure step 520 is carried out in the autoclave with a value comprised from a minimum of 0.35 bar to a maximum of 5 bar. The last step is the cooling step 530 which can be carried out in a water or air autoclave or outside the autoclave still using water or air or at room temperature. Next will be the generic step of sending the finished product to the distribution through all sales channels such as retail, foodservice, industry and horeca channel.

At this point it should be pointed out that the present invention provides for further alternative embodiments at some variants of the production steps. For example, even if so far in the chestnuts input and preparation step 110 were included fresh chestnuts or chestnuts suitable for roasting, besides being deemed as non-limiting, this meaning must rather comprise any size and variety of chestnuts as well as brown chestnuts. Furthermore, still with the aim of extending and not limiting the present invention, the type of chestnuts suitable for use in the method subject of the invention comprises chestnuts or brown chestnuts of all possible origins, varieties and sizes, same case applying to chilled/frozen and peeled chestnuts and brown chestnuts, chilled/frozen and not perfectly peeled chestnuts and brown chestnuts, chestnuts and brown chestnuts completely or partially peeled and thawed naturally at room temperature, peeled chestnuts and brown chestnuts completely or partially thawed in water at temperatures that can range from 1°C to 100°C and for times ranging from 3 min to 90 min, peeled chestnuts and brown chestnuts completely or partially thawed by steam, with pressure values comprised between 0.5 bar and 25 bar and at a temperature respectively comprised between 80°C and 235°C respectively, for a period between 2 min and 90 min, dry chestnuts and brown chestnuts, fresh chestnuts and brown chestnuts, rehydrated chestnuts and brown chestnuts and chestnuts and brown chestnuts in pieces. A further alternative embodiment provides for that the step 410 for packaging the roast chestnuts coming from the previous steps in bags/jars can be obtained by packaging the aforementioned roast chestnuts using techniques comprising packaging in stand-up bags with lower bellows, in stand-up bags with flat bottom, in stand-up retort bags, in vacuum bags, in cushion bags, in shaped stand-up bags, in stand-up bags with lateral bellows, in bags with 4 seals, in stand-up bags with spout, in bags with 3 seals, in multi-joined bags with aluminium, in multi-joined bags without aluminium, in doypack bags, in flat bags with 3 seals, in doypack bags with sealing zip, in plastic jars or trays with cap closure or with heat-sealed material, in glass jars, s and in paper bags

A further alternative embodiment provides for that the type of packaging used in the packaging process 400 consists in one or more techniques comprising packaging in atmosphere with nitrogen and/or mixtures of gases, vacuum packaging, balanced atmosphere packaging, packaging without modified atmosphere.

Still a further alternative embodiment according to the present invention provides for that the aforementioned step 220 for roasting the chestnuts can be carried out through one of the methods comprising roasting in a static electric oven with or without belt and with or without trays/dripping pans, roasting in a ventilated electric oven with belt or with trays, roasting in a static gas oven with trays, roasting in a ventilated gas oven with belt and with trays, roasting on embers, roasting on grills, roasting on hot charcoal and direct roasting on fire deriving from gas, inflammable liquids or firewood.

## Claims

1. Method for producing packaged roast chestnuts consisting of the following processes:
a. process for preparing and peeling the chestnuts (100) consisting of the step of input and preparation of the chestnuts (110) wherein the latter are arranged fresh or however in a state appropriate for roasting, but with humidity content comprised between 10% and 80%, on special roller benches in the processing line, thanks to which the personnel has a perfect and full view of the product to be discarded in advance, the washing step (120) in which the immersion of the chestnuts in special vats occurs, the peeling step (130) in which the elimination of the pericarp and of the episperm of the chestnuts occurs by using conventional peeling equipment that use steam or the "brulage" method on open fire and lastly the reduction step (140) in which the chestnuts are conveyed in freezing tunnels at the temperature of at least -18°C for a period comprised between 4 hours and 24 hours;
b. roasting process (200), in which the frozen and by now peeled product is subjected to the screening step (210) carried out by the designated personnel capable of eliminating the chestnuts with any - even minimum - quality defect, to the roasting step (220) in which the chestnuts are manually placed on a conveyor belt or on dripping pans and arranged in a conventional static or ventilated oven for a period comprised between 1 min and 90 min and with a temperature range comprised between 600°C and 150°C;
c. packaging process (400) which consists in the step (410) of packaging the roast chestnuts coming from the previous processes in containers, , such as bags, trays or jars, suitable to be subj ected to microwave oven treatment with a conventional domestic microwave and in the step of packaging in a protective atmosphere (420);
d. stabilisation process (500) consisting of the stabilisation/sterilisation step (510) in which said roast chestnuts in said containers are subjected to treatment in a conventional autoclave, such as a steam and ventilated steam autoclave or a water and steam shower autoclave, for a period comprised between 3 min and 3 hours and with a temperature range comprised between 75°C and 135°C, the counter-pressure step (520) in which created in the aforementioned autoclave is a counter-pressure with a value comprised between 0.35 bars and 5 bars and lastly the cooling step (530) which may occur in a water or air autoclave or outside the autoclave, still of the air or water or at room temperature type,
e. aromatisation process (300), which can be carried out before or immediately after the aforementioned roasting process (200), said aromatisation process (300) comprising the step of selecting and preparing the aromatising agent (310) which consists of selecting at least one substance comprised between fresh or dry laurel, ginger, lemon, orange skin, wine, various liquors, cinnamon, vanilla, refined sugar, cane sugar and other types of unrefined sugar, millefiori honey, acacia honey, chestnut honey, salt, pepper, turmeric, sweet paprika, spicy paprika, onion, shallot, garlic, Brussels sprouts, thyme, parsley, cocoa, various spices and comprising a mixing step (320) wherein the produced chestnuts or roast chestnuts are placed at contact and packaged with at least one of the aforementioned aromatising agents.

2. Method for producing packaged roast chestnuts according to claim 1, **characterised in that** the chestnuts conveyed to said roasting process (200) include those of any origin, size and variety, such as brown chestnuts and frozen/deep frozen and peeled chestnuts and brown chestnuts, frozen/deep frozen and not perfectly peeled chestnuts and brown chestnuts, chestnuts and brown chestnuts that are fully or partly peeled and defrosted naturally at room temperature, chestnuts and brown chestnuts that are fully or partly peeled defrosted in water at temperatures comprised between 1°C and 100°C and at time intervals comprised between 3 min and 90 min, chestnuts and brown chestnuts that are fully or partly peeled defrosted with steam with pressure values comprised between 0.5 bars and 25 bars and at a temperature respectively comprised between 80°C and 235°C for time intervals comprised between 2 min and 90 min, dry chestnuts and brown chestnuts, fresh chestnuts and brown chestnuts, rehydrated chestnuts and brown chestnuts and chestnuts and brown chestnuts in pieces.

3. Method for producing packaged roast chestnuts according to claim 1, **characterised in that** said step (410) for bagging/jarring the roast chestnuts comprises packaging in stand-up bags with lower bellows, in stand-up bags with flat bottom, in stand-up retort bags, in vacuum bags, in cushion bags, in shaped stand-up bags, in stand-up bags with lateral bellows, in bags with 4 seals, in stand-up bags with spout, in bags with 3 seals, in multi-joined bags with aluminium, in multi-joined bags without aluminium, in doypack bags, in flat bags with 3 seals, in doypack bags with sealing zip, in plastic jars or trays with cap closure or with heat-sealed material, in glass jars, in aluminium or steel cans and in paper bags.

4. Method for producing packaged roast chestnuts according to claim 1, **characterised in that** the type of packaging used in the packaging process (400) consists in one or more techniques comprising packaging in atmosphere with nitrogen and/or mixtures of gases, vacuum packaging, balanced atmosphere packaging, packaging without modified atmosphere.

5. Method for producing packaged roast chestnuts according to claim 1, **characterised in that** the roasting in the aforementioned step (220) for roasting the chestnuts can be carried out through one of the methods comprising roasting in a static electric oven with or without belt and with or without trays/dripping pans, roasting in a ventilated electric oven with belt or with trays, roasting in a static gas oven and with trays, roasting in a ventilated gas oven with belt and with trays, roasting on embers, roasting on grills, roasting on hot charcoal and direct roasting on fire deriving from gas, inflammable liquids or firewood.

## Patentansprüche

1. Verfahren zur Herstellung verpackter gerösteter Kastanien, bestehend aus den folgenden Prozessen:
a. Prozess zum Vorbereiten und Schälen der Kastanien (100), das den Schritt der Einspeisung und Vorbereitung der Kastanien (110) aufweist, wobei die letzteren frisch oder aber in einem zum Rösten geeigneten Zustand, jedoch mit einem Feuchtigkeitsgehalt zwischen 10 % und 80 %, auf speziellen Rollenbänken in der Verarbeitungslinie angeordnet werden, dank derer das Personal eine perfekte und vollständige Sicht auf das zu auszumusternde Produkt im Voraus hat, den Waschschritt (120), in dem das Eintauchen der Kastanien in spezielle Behältnissen erfolgt, den Schälschritt (130), bei dem die Beseitigung der Fruchtschale und der Samenschalte der Kastanien durch Verwenden herkömmlicher Schälausrüstung, die Dampf oder das "Brulage"-Verfahren auf offenem Feuer verwendet, erfolgt, entfernt werden, und schließlich den Reduktionsschritt (140), bei dem die Kastanien in Gefriertunneln bei einer Temperatur von zumindest -18°C über einen Zeitraum zwischen 4 und 24 Stunden transportiert werden;
b. Röstprozess (200), bei dem das gefrorene und inzwischen geschälte Produkt dem Schritt des Aussortierens (210) unterzogen wird, der durch das dazu bestimmte Personal durchgeführt wird, das in der Lage ist, die Kastanien mit jeglichem - auch minimalem - Qualitätsmangel auszusortieren, und dem Röstschritt (220), bei dem die Kastanien manuell auf ein Förderband oder auf Tropfschalen und in einem herkömmlichen statischen oder Umluft-Ofen für einen Zeitraum zwischen 1 Min. und 90 Min. und mit einem Temperaturbereich zwischen 600°C und 150°C platziert werden;
c. Verpackungsprozess (400), der in dem Schritt (410) des Verpackens der gerösteten Kastanien, die von den vorhergehenden Verfahren kommen, in Behältern wie etwa Beuteln, Schalen oder Gefäßen, die geeignet sind, einer Mikrowellenofenbehandlung mit einer herkömmlichen Haushaltsmikrowelle unterzogen zu werden, und in dem Schritt des Verpackens in einer Schutzatmosphäre (420) besteht;
d. Stabilisierungsprozess (500), bestehend aus dem Stabilisierungs-/Sterilisierungsschritt (510), bei dem die gerösteten Kastanien in den Behältern für einen Zeitraum zwischen 3 Minuten und 3 Stunden und mit einem Temperaturbereich zwischen 75°C und 135°C einer Behandlung in einem herkömmlichen Autoklaven wie etwa einem Dampf- und Umluft-Dampfautoklaven oder einem Wasser- und Dampfduschautoklaven unterzogen werden, dem Gegendruckschritt (520), bei dem in dem vorgenannten Autoklaven ein Gegendruck mit einem Wert zwischen 0,35 bar und 5 bar erzeugt wird, und schließlich der Abkühlungsschritt (530), der in einem Wasser- oder Luftautoklaven oder außerhalb des Autoklaven, noch an der Luft, im Wasser oder bei Raumtemperatur stattfinden kann,
e. einen Aromatisierungsprozess (300), der vor oder unmittelbar nach dem vorgenannten Röstprozess (200) durchgeführt werden kann, wobei der Aromatisierungsprozess (300) den Schritt des Auswählens und Zubereitens des Aromatisierungsmittels (310) aufweist, der darin besteht, mindestens eine Substanz auszuwählen, die zwischen frischem oder trockenem Lorbeer, Ingwer, Zitrone, Orangenschale, Wein, verschiedenen Likören, Zimt, Vanille, raffiniertem Zucker, Rohrzucker und anderen Arten von unraffiniertem Zucker, Millefiori-Honig, Akazienhonig, Kastanienhonig, Salz, Pfeffer, Kurkuma, süßem Paprika, scharfem Paprika, Zwiebel, Schalotte, Knoblauch, Rosenkohl, Thymian, Petersilie, Kakao, verschiedenen Gewürzen aufweist, und einen Mischschritt (320) aufweist, bei dem die hergestellten Kastanien oder gerösteten Kastanien mit zumindest einem der vorgenannten Aromatisierungsmittel in Kontakt gebracht und verpackt werden.

2. Verfahren zur Herstellung verpackter gerösteter Kastanien nach Anspruch 1, **dadurch gekennzeichnet, dass** die dem Röstprozess (200) zugeführten Kastanien solche jeglicher Herkunft, Größe und Sorte enthalten, wie etwa braune Kastanien und gefrorene/tiefgefrorene und geschälte Kastanien und braune Kastanien, gefrorene/tiefgefrorene und nicht perfekt geschälte Kastanien und braune Kastanien, Kastanien und braune Kastanien, die ganz oder teilweise geschält und auf natürliche Weise bei Raumtemperatur aufgetaut werden, Kastanien und braune Kastanien, die ganz oder teilweise geschält und in Wasser bei Temperaturen zwischen 1°C und 100°C und in Zeitintervallen zwischen 3 min und 90 min aufgetaut werden, Kastanien und braune Kastanien, die mit Dampf bei Druckwerten zwischen 0,5 bar und 25 bar und bei einer Temperatur zwischen 80°C und 235°C für Zeitintervalle zwischen 2 min und 90 min ganz oder teilweise geschält wurden, trockene Kastanien und braune Kastanien, frische Kastanien und braune Kastanien, rehydrierte Kastanien und braune Kastanien sowie Kastanien und braune Kastanien in Stücken.

3. Verfahren zur Herstellung verpackter gerösteter Kastanien nach Anspruch 1, **dadurch gekennzeichnet, dass** der Schritt (410) des Verpackens/Einmachens der gerösteten Kastanien das Verpacken in Standbeuteln mit unteren Balgen, in Standbeuteln mit flachem Boden, in Standretortenbeuteln, in Vakuumbeuteln, in Kissenbeuteln, in geformten Standbeuteln, in Standbodenbeuteln mit seitlichen Balgen aufweist, in Beuteln mit 4 Versiegelungen, in Standbodenbeuteln mit Ausgießer, in Beuteln mit 3 Versiegelungen, in mehrfach verbundenen Beuteln mit Aluminium, in in mehrfach verbundenen Beuteln ohne Aluminium, in Doypack-Beuteln, in Flachbeuteln mit 3 Siegeln, in Doypack-Beuteln mit Siegelreißverschluss, in Kunststoffbehältern oder -schalen mit Deckelverschluss oder mit heißgesiegeltem Material, in Glasbehältern, in Aluminium- oder Stahldosen und in Papiertüten.

4. Verfahren zur Herstellung verpackter gerösteter Kastanien nach Anspruch 1, **dadurch gekennzeichnet, dass** die Art des in dem Verpackungsprozess (400) verwendeten Verpackens aus einer oder mehr Techniken, die das Verpacken in Atmosphäre mit Stickstoff und/oder Mischungen von Gasen, das Vakuumverpacken, das Verpacken in ausgeglichener Atmosphäre und das Verpacken ohne modifizierte Atmosphäre aufweisen, besteht.

5. Verfahren zur Herstellung verpackter gerösteter Kastanien nach Anspruch 1, **dadurch gekennzeichnet, dass** das Rösten in dem vorgenannten Schritt (220) zum Rösten der Kastanien durch eines der Verfahren durchgeführt werden kann, die das Rösten in einem statischen Elektroofen mit oder ohne Band und mit oder ohne Schalen/Tropfschalen, das Rösten in einem Umluft-Elektroofen mit Band oder mit Schalen, das Rösten in einem statischen Gasofen und mit Schalen, das Rösten in einem Umluft-Gasofen mit Band und mit Schalen, das Rösten auf Glut, das Rösten auf Grills, das Rösten auf heißer Holzkohle und das direkte Rösten auf Feuer, das von Gas, entzündlichen Flüssigkeiten oder Brennholz herrührt, aufweisen.

## Revendications

1. Procédé pour produire des châtaignes grillées emballées, constitué des traitements suivants :
a. traitement pour préparer et peler les châtaignes (100), consistant en l'étape d'entrée et de préparation des châtaignes (110) dans laquelle ces dernières sont disposées, fraîches ou du moins dans un état approprié pour être grillées, mais avec une teneur une humidité comprise entre 10 % et 80 %, sur des bancs à rouleaux spéciaux dans la chaîne de traitement, grâce auxquels le personnel a à l'avance une vue parfaite et complète du produit à écarter, l'étape de lavage (120) dans laquelle a lieu l'immersion des châtaignes dans des bacs spéciaux, l'étape d'épluchage (130) dans laquelle l'élimination du péricarpe et de l'épisperme des châtaignes se fait en utilisant un équipement d'épluchage classique qui utilise de la vapeur ou le procédé de "brûlage" au feu direct, et enfin l'étape de réduction (140) dans laquelle les châtaignes sont acheminées dans des tunnels de congélation à la température d'au moins - 18°C pendant une période comprise entre 4 heures et 24 heures ;
b. traitement de grillage (200) dans lequel le produit congelé et désormais épluché est soumis à l'étape de criblage (210) réalisée par le personnel désigné capable d'éliminer les châtaignes avec un quelconque - même minimal - défaut de qualité à l'étape de grillage (220) dans laquelle les châtaignes sont placées manuellement sur un convoyeur à courroie ou sur des bacs d'égouttement et disposées dans un four statique ou ventilé classique pendant une période comprise entre 1 min. et 90 min. et avec une plage de température comprise entre 600°C et 150°C ;
c. traitement d'emballage (400) qui consiste en l'étape (410) d'emballer les châtaignes grillées provenant des traitements précédents dans des contenants, comme des sacs, des barquettes ou des pots, aptes à être soumis à un traitement au four à micro-ondes avec un four à micro-ondes domestique classique et en l'étape d'emballage dans une atmosphère de protection (420) ;
d. traitement de stabilisation (500) consistant en l'étape de stabilisation/stérilisation (510) dans laquelle lesdites châtaignes grillées dans lesdits contenants sont soumises à un traitement dans un autoclave classique, tel qu'un autoclave à vapeur et à vapeur ventilée ou un autoclave à douche d'eau et de vapeur, pour une période comprise entre 2 min. et 3 heures et avec une plage de température comprise entre 75°C et 135°C, l'étape de contre-pression (520) dans laquelle est créée dans l'autoclave susmentionné une contre-pression avec une valeur comprise entre 0,35 bar et 5 bar et enfin l'étape de refroidissement (530) qui peut avoir lieu dans un autoclave à eau ou à air, ou à l'extérieur de l'autoclave, toujours du type à air ou à eau ou à température ambiante,
e. traitement d'aromatisation (300), qui peut être réalisé avant ou immédiatement après le traitement de grillage (200) susmentionné, ledit traitement d'aromatisation (300) comprenant l'étape de sélection et de préparation de l'agent d'aromatisation (310) qui consiste à sélectionner au moins une substance parmi du laurier frais ou séché, du gingembre, du citron, du zeste d'orange, du vin, divers spiritueux, de la cannelle, de la vanille, du sucre raffiné, du sucre de canne et d'autres types de sucre non raffiné, du miel mille fleurs, du miel d'acacia, du miel de châtaignier, du sel, du poivre, du curcuma, du paprika doux, du paprika fort, de l'oignon, de l'échalote, de l'ail, des choux de Bruxelles, du thym, du persil, du cacao, diverses épices, et comprenant une étape de mélange (320) dans laquelle les châtaignes produites ou les châtaignes grillées sont placées en contact et emballées avec l'un au moins des agents d'aromatisation susmentionnés.

2. Procédé pour produire des châtaignes grillées emballées selon la revendication 1, **caractérisé en ce que** les châtaignes acheminées jusqu'audit traitement de grillage (200) incluent celles de toute origine, taille et variété, telles que des marrons et des châtaignes et marrons congelés/surgelés et pelés, des châtaignes et marrons congelés/surgelés et pas parfaitement pelés, des châtaignes et marrons qui sont entièrement ou partiellement pelés et décongelés naturellement à température ambiante, des châtaignes et marrons qui, entièrement ou partiellement pelés, sont décongelés dans de l'eau à des températures comprises entre 1°C et 100°C et à des intervalles compris entre 3 min. et 90 min., des châtaignes et marrons qui, entièrement ou partiellement pelés, sont décongelés avec de la vapeur avec des valeurs de vapeur comprises entre 0,5 bar et 25 bar et à une température comprise respectivement entre 80°C et 235°C pendant des intervalles compris entre 2 min. et 90 min., des châtaignes et marrons séchés, des châtaignes et marrons frais, des châtaignes et marrons réhydratés et des châtaignes et marrons en morceaux.

3. Procédé pour produire des châtaignes grillées emballées selon la revendication 1, **caractérisé en ce que** ladite étape (410) pour mettre en sachets/en pots les châtaignes grillées comprend l'emballage dans des sachets tenant debout avec des soufflets inférieurs, dans des sachets tenant debout avec un fond plat, dans des sachets tenant debout à bec, dans des sachets sous vide, dans des sachets-coussins, dans des sachets tenant debout structurés, dans des sachets tenant debout à soufflets latéraux, dans des sachets à quatre soudures, dans des sachets tenant debout avec bec verseur, dans des sachets avec trois soudures, dans des sachets multi-liaison avec de l'aluminium, dans des sachets multi-liaison sans aluminium, dans des sachets Doypack, dans des sachets plats à trois soudures, dans des sachets Doypack avec une fermeture à zip, dans des pots ou barquettes en matière plastique avec un couvercle ou avec un matériau thermoscellé, dans des pots en verre, dans des boîtes en aluminium ou en acier et dans des sachets en papier.

4. Procédé pour produire des châtaignes grillées emballées selon la revendication 1, **caractérisé en ce que** le type d'emballage utilisé dans le traitement d'emballage (400) consiste en une ou plusieurs techniques comprenant l'emballage en atmosphère avec de l'azote et/ou des mélanges de gaz, l'emballage sous vide, l'emballage sous atmosphère équilibrée, l'emballage sans atmosphère modifiée.

5. Procédé pour produire des châtaignes grillées emballées selon la revendication 1, **caractérisé en ce que** le grillage dans l'étape (220) susmentionnée pour griller les châtaignes peut être réalisée par l'un des procédés comprenant le grillage dans un four électrique statique avec ou sans courroie et avec ou sans barquettes/bacs d'égouttement, le grillage dans un four électrique ventilé avec courroie ou avec barquettes, le grillage dans un four à gaz statique et avec des barquettes, le grillage dans un four à gaz ventilé avec une courroie et avec des barquettes, le grillage sur des braises, le grillage sur des grills, le grillage sur du charbon chaud et le grillage direct sur un feu obtenu avec du gaz, des liquides inflammables ou du bois de chauffage.
